# EUROPEAN PATENT SPECIFICATION

(11) **EP 2 608 463 B1**
(45) Date of publication and mention of the grant of the patent: **03.04.2019**
(21) Application number: 12193053.1
(22) Date of filing: 16.11.2012
(51) Int. Cl.: H04L 12/58

(54) **Apparatus and method for managing attached file of message in portable terminal**
Vorrichtung und Verfahren zur Verwaltung einer angehängten Nachrichtendatei in einem tragbaren Endgerät
Appareil et procédé de gestion de fichier en pièce jointe de message dans un terminal portable

(30) Priority: 22.12.2011 KR 20110140159
(43) Date of publication of application: 26.06.2013
(73) Proprietor: Samsung Electronics Co., Ltd., Gyeonggi-do 443-742 (KR)
(72) Inventor: Chung, Yong-Su, Daegu (KR); Shin, Young-Sup, Gyeonggi-do (KR); Lim, Sung-Jun, Gyeonggi-do (KR); Cho, Sung-Woo, Gyeonggi-do (KR)
(74) Representative: HGF Limited

(56) References cited:
- EP-A1- 2 059 009
- EP-A2- 1 729 470
- US-A1- 2008 172 663
- US-A1- 2009 319 618

## Description

### TECHNICAL FIELD OF THE INVENTION

The present disclosure relates generally to an apparatus and method for managing an attached file of a message in a portable terminal.

### BACKGROUND OF THE INVENTION

Portable terminals have been rapidly developed in recent years. In particular, portable terminals capable of wireless voice call and data communication have become the necessities of life. At the early distribution of portable terminals, they have been simply recognized as being portable and providing a wireless call service. However, due to the development of technologies and the introduction of wireless Internet, the applications of the portable terminals have been gradually expanded so as to meet users' demands. For example, the portable terminals provide a phone call function, a scheduling function, a game function, a remote control function using near-field communication, a photographing function using a built-in digital camera, and the like. US 2008/172663 A1 appears to relate to a method of displaying attachment file list in mobile communication terminal, a method of downloading and uploading attachment file using e-mail protocol, and a mobile communication terminal for performing the same. Specifically it appears to disclose a method of displaying an attachment file list in a mobile communication terminal comprises receiving a message, selecting an attachment file list view menu in order to check entire attachment files comprised in the message, and extracting the attachment files comprised in the message and then displaying a list of the extracted attachment files. EP 1 729 470 A2 appears to relate to a method of displaying data in a wireless terminal and wherein the wireless terminal is adapted to display data. Specifically it appears to disclose an apparatus and method for displaying data in a wireless terminal. The display method includes the steps of attaching image data selected in a message mode; displaying the attached image data in a form of a thumbnail image; and transmitting a message including the thumbnail image. Another method for displaying data in a wireless terminal is disclosed, which includes the steps of: attaching a file selected in an email mode; displaying the attached file in a form of a thumbnail image; and transmitting an email including the thumbnail image. Another method for displaying data in a wireless terminal is disclosed including the steps of displaying a thumbnail image attached to a message when the message is received and displaying original image data of a selected thumbnail image when a predetermined thumbnail image is selected from the displayed thumbnail image.

Among the functions of portable terminals, a message function is widely used by users because it is relatively inexpensive.

Also, the message function evolves from a simple text message into a multimedia message service (MMS) that is a message service added with videos, pictures, music files, or the like.

The MMS enables the transmission of a combination of texts, music, images, videos, link information, and the like. Thus, users may transmit wireless postcards, pictures, videos, video cards, maps, name cards, and the like, through multimedia messages.

However, in order to use a multimedia message, a user should check the content of an attached file after selecting a received or transmitted message, which inconveniences the user.

In particular, when more multimedia messages are stored in the portable terminals, the user should check more multimedia messages, which increases inconvenience to the user.

What is therefore needed is an apparatus and method for allowing a user to easily check a file included in a multimedia message prestored in a portable terminal.

### SUMMARY OF THE INVENTION

To address the above-discussed deficiencies of the prior art, it is a primary object to provide at least the advantages below. Accordingly, an object of the present disclosure is to provide an apparatus and method for managing an attached file of a multimedia message in a portable terminal.

Another object of the present disclosure is to provide an apparatus and method for extracting and listing information about an attached file of a multimedia message in a portable terminal.

Another object of the present disclosure is to provide an apparatus and method for extracting information representing an attached file of a multimedia message in a portable terminal.

Another object of the present disclosure is to provide an apparatus and method for linking an attached file of a multimedia message in a portable terminal with a function of the portable terminal.

The invention is defined in the independent claims. Additional features of the invention are provided in the dependent claims.

According to an aspect of the present disclosure, a method for managing a MMS message in a portable terminal includes: acquiring an attached file from a message including an attached file; determining an attached file type of the attached file; determining a message processing type of the MMS message; storing the acquired attached file to a group associated with at least one of the attached file type or the message processing type; generating an attached file list including information about the stored attached file; and displaying the attached file list.

According to another aspect of the present disclosure, an electronic apparatus includes: one or more processors; a memory; and one or more modules stores in the memory and executed by the one or more processors, wherein the module acquires an attached file from a MMS message including an attached file, determines an attached file type of the attached file; determines a message processing type of the MMS message; stores the acquired attached file to a group associated with at least one of the attached file type or the message processing type; generates an attached file list about the stored attached file, and displays the attached file list.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 illustrates a block diagram of a portable terminal managing a list of attached files of multimedia messages according to the present disclosure;
FIG. 2 illustrates a flowchart of a process of listing information about an attached file of a prestored multimedia message in a portable terminal according to an exemplary embodiment of the present disclosure;
FIG. 3 illustrates a flowchart of a process of listing information about an attached file of a received message in a portable terminal according to another exemplary embodiment of the present disclosure;
FIG. 4 illustrates a flowchart of a process of listing representative information about an attached file in a portable terminal according to another exemplary embodiment of the present disclosure;
FIGs. 5A-C illustrate a process of listing information about an attached file of a multimedia message in a portable terminal according to an exemplary embodiment of the present disclosure;
FIGs. 6A-B illustrate a process of updating information about an attached file of a multimedia message in a portable terminal according to another exemplary embodiment of the present disclosure;
FIGs. 7A-D illustrate a process of controlling representative information in a portable terminal according to another exemplary embodiment of the present disclosure;
FIGs. 8A-B illustrate a process of grouping representative information about multimedia messages in a portable terminal according to another exemplary embodiment of the present disclosure;
FIGs. 9A-B illustrate a process of grouping representative information about multimedia messages in a portable terminal according to another exemplary embodiment of the present disclosure; and
FIG. 10 illustrates a flowchart a process of listing information about a transmitted message in a portable terminal according to another exemplary embodiment of the present disclosure.

### DETAILED DESCRIPTION OF THE INVENTION

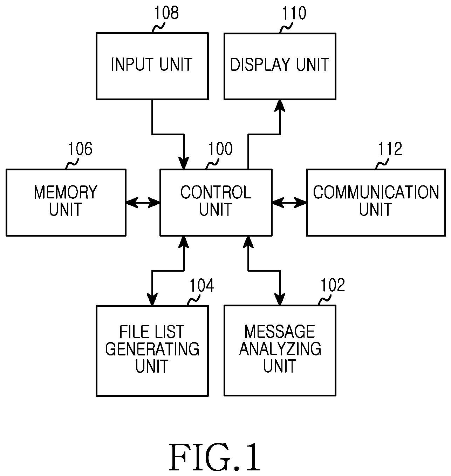

FIGURES 1 through 10, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device. Exemplary embodiments of the present disclosure will be described herein below with reference to the accompanying drawings. In the following description, detailed descriptions of well-known functions or configurations will be omitted since they would unnecessarily obscure the subject matters of the present disclosure.

The present disclosure relates to an apparatus and method for managing an attached file of a multimedia message in a portable terminal.

The present disclosure provides an apparatus and method for listing and managing information about an attached file of a multimedia message in a portable terminal. Herein, the multimedia message may be any message including contents such as images and videos. Examples of the multimedia message include e-mail messages and instant messages. In addition, the portable terminal may be any electronic device capable of transmitting/receiving a message. Examples of the portable terminal include mobile terminals, smart phones, personal digital assistants (PDAs), WiBro terminals, personal computers (PCs), notebook computers, and tablet terminals. Also, the portable terminal may be any portable electronic device including a combination of two or more functions of the above-mentioned devices.

FIG. 1 illustrates a block diagram of a portable terminal managing a list of attached files of multimedia messages according to the present disclosure.

Referring to FIG. 1, the portable terminal may include a control unit 100, a message analyzing unit 102, a file list generating unit 104, a memory unit 106, an input unit 108, a display unit 110, and a communication unit 112.

The control unit 100 may control an overall operation of the portable terminal. For example, the control unit 100 may process and control voice communication and data communication. In addition to the general functions, according to the present disclosure, the control unit 100 may list and manage an attached file of a prestored multimedia message.

In addition, the control unit 100 may extract an attached file of a received multimedia message and update an attached file list.

In addition, when receiving a selection of an attached file from a user after displaying the attached file list, the control unit 100 may execute the attached file by using an application corresponding to the attached file.

The operation of the control unit 100 may be executed by a specific software module (command set) stored in the memory unit 106. Herein, the software module may be executed by the control unit 100.

Under the control of the control unit 100, the message analyzing unit 102 may acquire an attached file of a prestored multimedia message or a received multimedia message.

In addition, the message analyzing unit 102 may analyze header information of a prestored multimedia message or a received multimedia message, detect a type of the attached file of the multimedia message, and acquire representative information about the attached file, such as a name of the attached file, an image of the attached file, a message title, a summary description, and a preview file.

For example, the message analyzing unit 102 may detect a content type field among header information of the multimedia message and determine a type of the attached file (e.g., audio data, video data, image data, text data, and name cards).

In addition, when detecting the attachment of audio data to the multimedia message, the message analyzing unit 102 may use a file name and a preview file about an audio file as representative information.

Under the control of the control unit 100, the file list generating unit 104 may manage representation information about an attached file acquired by the message analyzing unit 102.

Herein, the file list generating unit 104 may generate separate lists for an attached file (or representative information) of a received message and an attached file (or representative information) of a transmitted message, or may generate a single list for an attached file (or representative information) of a received message and an attached file (or representative information) of a transmitted message.

In addition, the file list generating unit 104 may group an attached file (or representative information) according to a type of the attached file. That is, the file list generating unit 104 may classify and group an attached file (or representative information) of image data, which can be displayed by an image viewer, among acquired attached files (or representative information), and then store the same in a photo album. Also, the file list generating unit 104 may classify and group an attached file (or representative information) of video or audio data, which can be played by a media player, among acquired attached files (or representative information), and then store the same in a play list.

The operations of the message analyzing unit 102 and the file list generating unit 104 may be executed by a specific software module (command set) stored in the memory unit 106.

The memory unit 106 may include a read-only memory (ROM), a random-access memory (RAM), and a flash ROM. The ROM may store various reference data and microcodes of programs for the process and control of the control unit 100, the message analyzing unit 102, and the file list generating unit 104.

The RAM may be a working memory of the control unit 100, and may store temporary data that are generated during the execution of various programs. The flash ROM may store various updatable data such as phone book data, outgoing messages, and incoming messages. In addition, the memory unit 106 may store an attached file (or representative information) acquired by the message analyzing unit 102 according to the present disclosure.

The memory unit 106 may store a software module for operating the control unit 100, the message analyzing unit 102, and the file list generating unit 104 according to the present disclosure.

The input unit 108 may include numeric keys of 0-9 and a plurality of function keys, such as a Menu key, a Cancel (Delete) key, a Confirmation (OK) key, a Talk (Call) key, an End key, an Internet connection key, Navigation keys (or Arrow keys), and character input keys. The input unit 110 may provide the control unit 100 with key input data that corresponds to a key pressed by the user. In addition, the input unit 108 may provide the control unit 100 with key input data for selection of an attached file (or representative information) listed according to the present disclosure.

The display unit 110 may display numerals, characters, moving pictures, still pictures, and status information generated during an operation of the portable terminal. According to the present disclosure, the display unit 110 may display only data corresponding to a frame available to itself, among data included in a message. The display unit 110 may include a color liquid crystal display (LCD), an active matrix organic light emitting diode (AMOLED), and the like. If the display unit 110 has a touch input device and is applied to a touch input type portable terminal, it may be used as an input device. According to the present disclosure, the display unit 110 may display a list (attached file list (or representative information list)) generated by the file list generating unit 104.

In fact, it is within the scope of the presently claimed invention that the input unit 108 and display unit 110 could all be served by a single touch screen. That is, a touch sensitive display, called as a touch screen, may be used as the display unit 110. In this situation, touch input may be performed via the touch sensitive display.

The communication unit 112 transmits/receives Radio Frequency (RF) signals inputted/outputted through an antenna (not illustrated). The communication unit 114 may transmit/receive Radio Frequency (RF) signals inputted/outputted through an antenna (not illustrated). For example, in a transmitting (TX) mode, the communication unit 114 may channel-encode, spread and RF-process TX data prior to transmission. In a receiving (RX) mode, the communication unit 114 may convert a received RF signal into a baseband signal and despread and channel-decode the baseband signal to restore the original data. According to the present disclosure, the communication may transmit/receive a multimedia message including an attached file.

The above configurations should be considered in descriptive sense only and not for the purpose of limitation, and those skilled in the art will understand that various changes may be made therein without departing from the scope of the present disclosure. For example, although the message analyzing unit 102 and the file list generating unit 104 are configured and illustrated separately, the control unit 100 may be configured to perform all of the functions of the message analyzing unit 102 and the file list generating unit 104. As another example, the control unit 100 may be defined as a processor, and the message analyzing unit 102 and the file list generating unit 104 may be defined as respective processors.

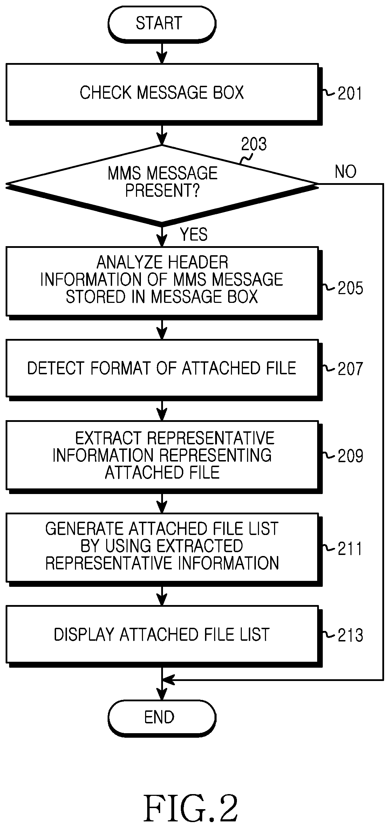

FIG. 2 illustrates a flowchart of a process of listing information about an attached file of a prestored multimedia message in a portable terminal according to an exemplary embodiment of the present disclosure.

Referring to FIG. 2, in step 201, the portable terminal checks a message box in which received messages, transmitted messages, and saved messages are stored. In step 203, the portable terminal determines whether a multimedia message is present in the message box. That is, in step 203, the portable terminal determines whether an MMS message received or transmitted by a user is stored in the message box.

If an MMS message is not present in the message box in step 203, the portable terminal ends the present algorithm.

On the other hand, if an MMS message is present in the message box in step 203, the portable terminal proceeds to step 205. In step 205, the portable terminal analyzes header information of an MMS message stored in the message box. Thereafter, in step 207, the portable terminal detects a type of an attached file. In general, a header of the MMS message may include a message title field, a transmitter number field, a receiver number field, a receiver information field, a content type field, a content length field, and the like. According to the present disclosure, the portable terminal may check a content type field and detect a type of an attached file included in a multimedia message (e.g., an audio file, a video file, an image file, and a name card).

In step 209, the portable terminal extracts representative information representing the attached file. In step 211, the portable terminal generates an attached file list by using the extracted representative information. Also, the portable terminal may list the attached file instead of the representative information.

Herein, the representative information may be information about an attached file to be listed. The representative information may include an attached file name, an image of an attached file, a message title, a summary description, and a preview file. The portable terminal may use a file name and a pre-listening file about an audio file as the representative information.

In addition, the portable terminal use a captured picture, a file name, a preview file about a video file as the representative information, and may use a file name and a captured image about an image file as the representative information.

In addition, the portable terminal may use summary information and a captured image about a name card as the representative information.

In step 213, the portable terminal displays the attached file list. Herein, the portable terminal may generate and display separate lists for an attached file of a received message and an attached file of a transmitted message, or may generate and display a single list for an attached file of a received message and an attached file of a transmitted message.

Thereafter, the portable terminal ends the present algorithm.

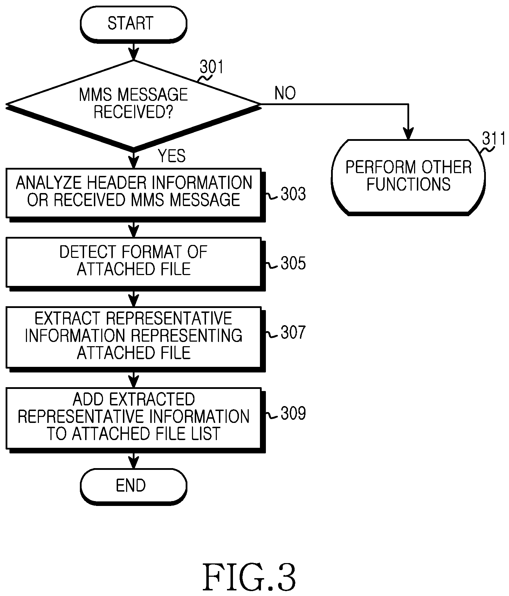

FIG. 3 illustrates a flowchart of a process of listing information about an attached file of a received message in a portable terminal according to another exemplary embodiment of the present disclosure.

Referring to FIG. 3, in step 301, the portable terminal determines whether a MMS message is received.

If an MMS message is not received in step 301, the portable terminal performs other functions (e.g., standby mode) in step 311.

On the other hand, if an MMS message is received in step 301, the portable terminal proceeds to step 303. In step 303, the portable terminal analyzes header information of the received MMS message. Thereafter, in step 305, the portable terminal detects a type of an attached file. Herein, as described above the portable terminal may check a content type field among a header of the MMS message and determine whether an audio file, a video file, an image file, a name card, or the like is attached thereto.

In step 307, the portable terminal extracts representative information representing the attached file. In step 309, the portable terminal may update the attached filed list by adding representative information about the MMS message to the attached file list. Herein, the attached file list may refer to an attached file included in the MMS message, or a representative information list about the attached file.

Thereafter, the portable terminal ends the present algorithm.

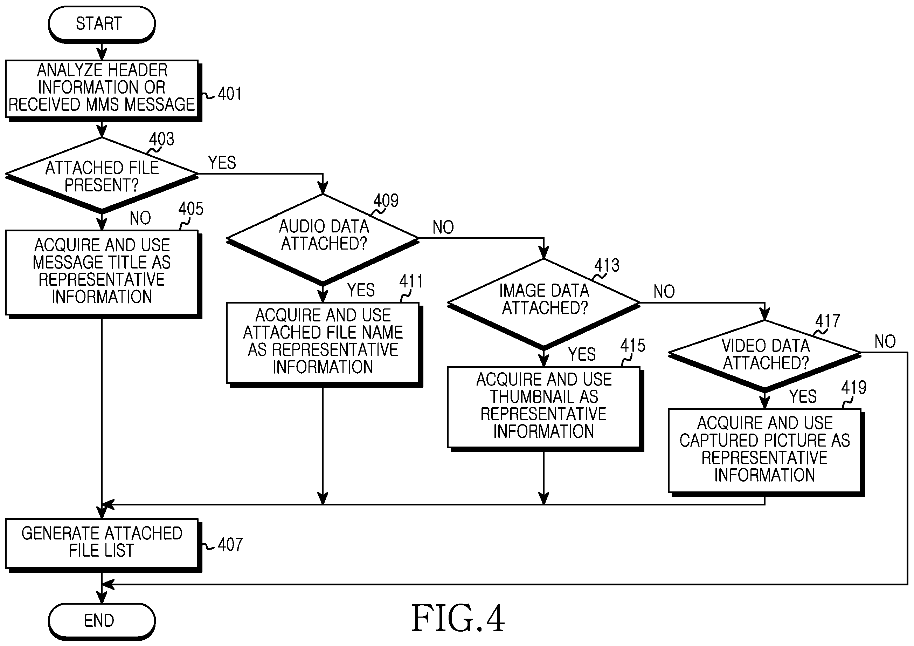

FIG. 4 illustrates a flow chart of a process of listing representative information about an attached file in a portable terminal according to another exemplary embodiment of the present disclosure.

Referring to FIG. 4, in step 401, the portable terminal analyzes header information of a received MMS message. In step 403, the portable terminal determines whether an attached file is present in the MMS message. Herein, the MMS message may include an attached file added by a transmitter, or may include long text data instead of an attached file.

If an attached file is not present in the MMS message in step 403, the portable terminal proceeds to step 405. In step 405, the portable terminal may acquire and use a message title as representative information about the MMS message, or may not generate representative information about a multimedia message that does not include an attached file.

On the other hand, if an attached file is present in the MMS message in step 403, the portable terminal proceeds to steps 409, 413 and 417. In step 409, 413 and 417, the portable terminal detects a type of the attached file of the MMS message, and sets representative information about the attached file. In the following description, in a representative information setting method according to an exemplary embodiment of the present disclosure, information other than information mentioned below may be used as representative information.

In step 409, the portable terminal determines whether audio data are attached to the MMS message. If audio data are attached to the MMS message in step 409, the portable terminal proceeds to step 411. In step 411, the portable terminal acquires and uses a file name of the audio data (i.e., the attached file) as representative information about the MMS message.

Also, in step 413, the portable terminal determines whether image data are attached to the MMS message. If image data are attached to the MMS message in step 413, the portable terminal proceeds to step 415. In step 415, the portable terminal acquires and uses a thumbnail of the image data (i.e., the attached file) as representative information about the MMS message.

In addition, in step 417, the portable terminal determines whether video data are attached to the MMS message. If video data are attached to the MMS message in step 417, the portable terminal proceeds to step 419. In step 419, the portable terminal acquires and uses a captured picture of the video data (i.e., the attached file) as representative information about the MMS message.

After acquiring the representative information in steps 405, 411, 415, or 419, the portable terminal proceeds to step 407. In step 407, the portable terminal generates an attached file list by using the representative information.

Although FIG. 4 illustrates a method for generating an attached file list of a received MMS message, the present disclosure may also generate an attached file list of a transmitted MMS message.

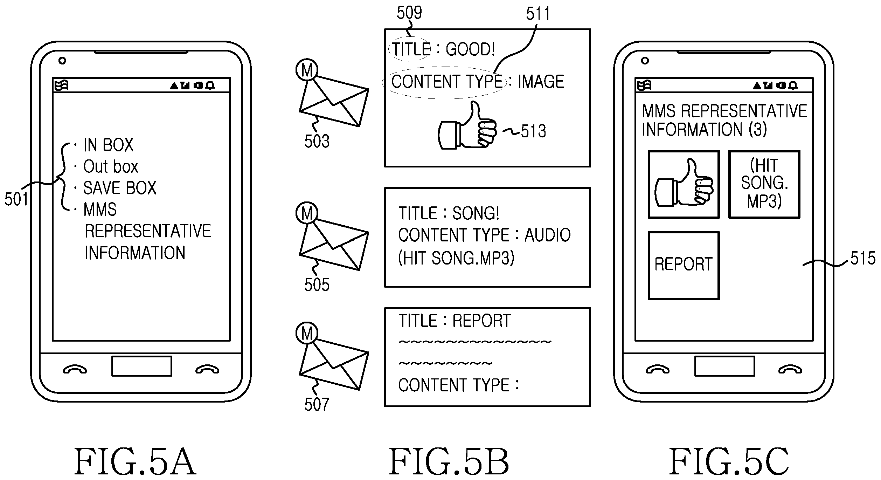

FIGs. 5A-C illustrate a process of listing information about an attached file of a multimedia message in a portable terminal according to an exemplary embodiment of the present disclosure.

Referring to FIGs. 5A-C, as illustrated in FIG. 5A, the portable terminal includes a message box 501 that stores received or transmitted messages. In addition, according to the present disclosure, the message box 501 may include a save box that stores representative information that is information about an attached file included in an MMS message. Herein, the representative information may include a file name of an attached file (e.g., image data, video data, audio data, or a name card included in the MMS message), an image of the attached file, a message title, a summary description, and a preview file.

In order to generate an attached file list, the portable terminal checks an MMS message stored in the message box, and analyzes header information of the stored MMS message.

That is, as illustrated in FIG. 5B, the portable terminal may check three stored MMS messages 503, 505 and 507. Herein, the header information of the MMS message includes a message title (509), a type of a file attached to a message (511), and information about an attached file (513).

The MMS message 503 has a title of "GOOD!!" and includes image data as an attached file. The MMS message 505 has a title of "Song!!" and includes audio data 'hit song'.

In addition, the MMS message 507 has a title of Report, and includes a long text without including a separate attached file.

Accordingly, the portable terminal may acquire a thumbnail of image data as representative information about the MMS message 503. Also, the portable terminal may acquire a file name of audio data as representative information about the MMS message 505. In addition, the portable terminal may acquire a message title as representative information about the MMS message 507.

Thereafter, as illustrated in FIG. 5C, the portable terminal lists and displays the representation information acquired from the respective MMS messages (515). That is, through separate lists, the portable terminal may provide a thumbnail about image data included in the MMS message 503, a file name about audio data included in the MMS message 505, and a message title of the MMS message 507.

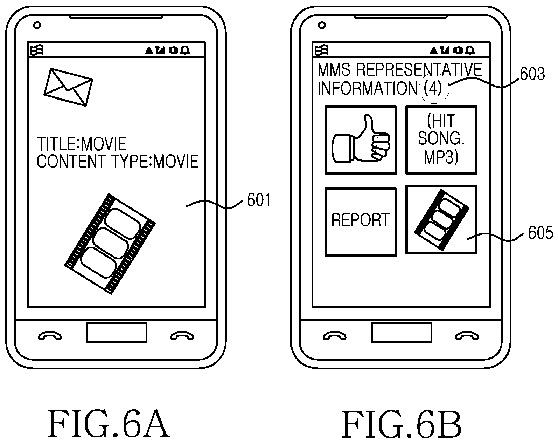

FIGs. 6A-B illustrate a process of updating information about an attached file of a multimedia message in a portable terminal according to another exemplary embodiment of the present disclosure.

Referring to FIGs. 6A-B, update of information about an attached file of an MMS message is a process of acquiring and attaching representative information about an attached file to a list whenever receiving an MMS message.

First, it is assumed that the portable terminal receives an MMS message after listing representative information.

That is, as illustrated in FIG. 6A, when receiving an MMS message attached with a video file (601), the portable terminal may acquire at least one of a captured image, (605) a message title, and a file name of an attached file as representative information of the received MMS message.

As illustrated in FIG. 6B, if acquiring a captured picture as the representative information, the portable terminal may add representative information about a newly-received MMS message to a generated representative information list. Accordingly, the number of representative information lists may also be updated (603). This is illustrated in FIG. 6B.

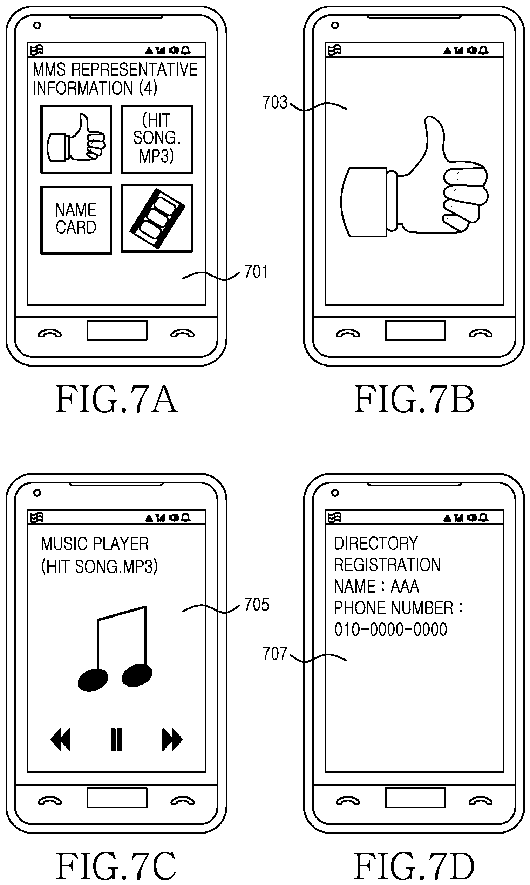

FIGs. 7A-D illustrate a process of controlling representative information in a portable terminal according to another exemplary embodiment of the present disclosure.

Referring to FIGs. 7A-D, as illustrated in FIG. 7A, the portable terminal lists and displays four types of representative information (701). Herein, the representative information is information about an attached file included in a multimedia message stored in the portable terminal. Also, the portable terminal stores thumbnail information about image data, pre-listening information about audio data, summary information about a name card, and preview information about video data, as representative information.

As illustrated in FIG. 7B, if detecting a selection of representative information about image data by a user, the portable terminal may execute an image viewer and then display a thumbnail about the image data (703).

In addition, as illustrated in FIG. 7C, if detecting a selection of preview information about audio data by the user, the portable terminal may execute a media player and then play preview data (705).

In addition, as illustrated in FIG. 7D, if detecting a selection of summary information about a name card by the user, the portable terminal may activate a directory function and then include user information about the name card in a directory (707).

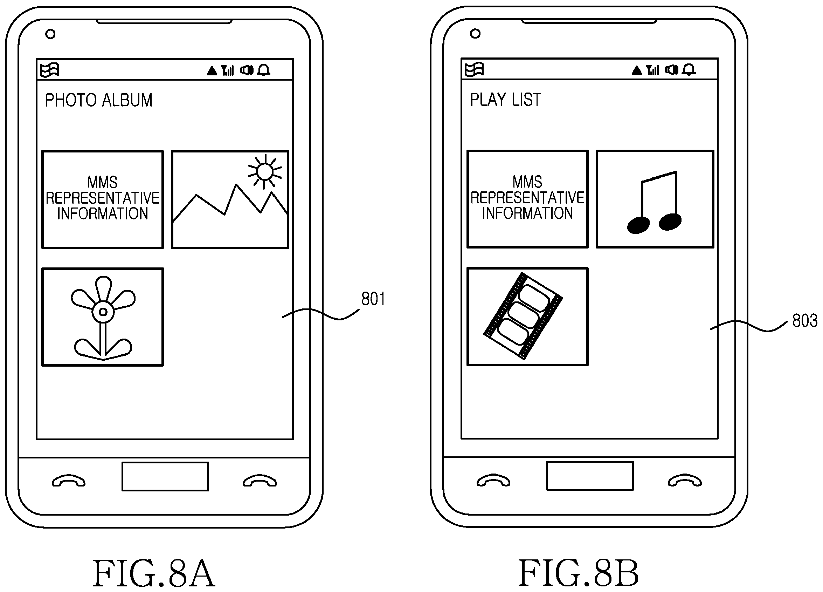

FIGs. 8A-B illustrate a process of grouping representative information about multimedia messages in a portable terminal according to another exemplary embodiment of the present disclosure.

Referring to FIG. 8A-D, the portable terminal may list and display representative information that is information of an attached file included in a prestored MMS message.

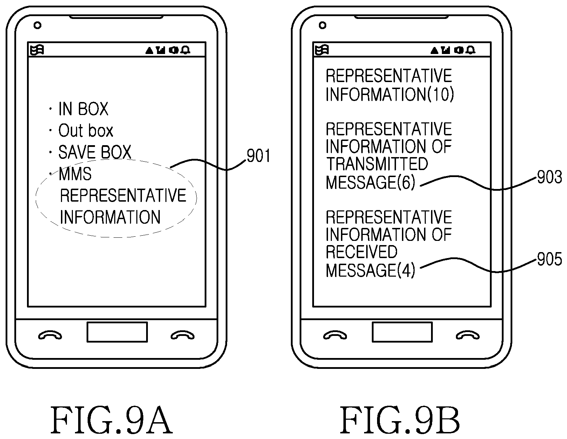

According to the present disclosure, the portable terminal may group and manage representative information about a received message or a transmitted message in a message box. That is, representative information is grouped according to a message processing type, which will be described later with reference to FIG. 9.

In addition, the portable terminal may group representative information according to a type of an attached file. That is, as illustrated in FIG. 8A, the portable terminal may classify and group representative information about image data, which can be displayed by an image viewer, among acquired representative information and then separately save the same in a photo album (801). As illustrated in FIG. 8B, the portable terminal may classify and group representative information about audio data, which can be played by a media player, and then separately save the same in a play list (803).

FIGs. 9A-B illustrate a process of grouping representative information about multimedia messages in a portable terminal according to another exemplary embodiment of the present disclosure.

Referring to FIGs. 9A-B, the portable terminal may list and display representative information that is information of an attached file included in a prestored MMS message.

Herein, the portable terminal may manage acquired representative information by using a message box.

That is, as illustrated in FIG. 9A, the portable terminal may generate a menu, which is used to store MMS representative information in a message box that is used to manage received messages, transmitted messages, and saved messages, and then store information about an attached file of a prestored MMS message (901).

For example, the portable terminal may separately manage representative information about an attached file included in a transmitted message and representative information about an attached file included in a received message, in an MMS representative information menu. FIG. 9B illustrates that 10 pieces of representative information is included in an MMS representative information menu. Herein, 10 pieces of representative information include representative information about 6 transmitted messages (903) and representative information about 4 received messages (905).

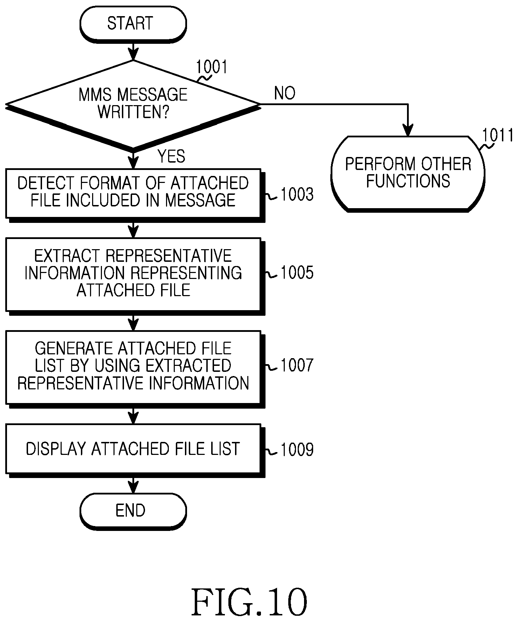

FIG. 10 illustrates a flowchart a process of listing information about a transmitted message in a portable terminal according to another exemplary embodiment of the present disclosure.

Referring to FIG. 10, in step 1001, the portable terminal determines whether a multimedia message to be transmitted to a counterpart terminal is written.

If an MMS message is not written in step 1001, the portable terminal performs other functions (e.g., standby mode) in step 1011.

On the other hand, if an MMS message is written in step 1001, the portable terminal proceeds to step 1003. In step 1003, the portable terminal detects a type of an attached file included in the message. In step 1005, the portable terminal extracts representative information representing the attached file. Herein, the portable terminal may check an attached file selected by a user, to determine whether an audio file, a video file, an image file, or a name card is attached.

In step 1007, the portable terminal generates an attached file list by using the extracted representative information. In step 1009, the portable terminal outputs representative information about the MMS message to the attached file list.

Thereafter, the portable terminal ends the present algorithm.

The methods according to the exemplary embodiments described in the claims and/or specification of the present disclosure may be implemented by hardware, software, or a combination thereof.

When the methods are implemented by software, a computer-readable storage medium may be provided to store one or more programs (software modules). The one or more programs stored in the computer-readable storage medium may be configured for execution by one or more processors in an electronic device such as a portable terminal. The one or more programs may include instructions for causing the electronic device to execute the methods according to the exemplary embodiments described in the claims and/or specification of the present disclosure.

These programs (software modules or software) may be stored in random access memories (RAMs), nonvolatile memories including flash memories, read only memories (ROMs), electrically erasable programmable ROMs (EEPROMs), magnetic disc storage devices, compact disc-ROMs (CD-ROMs), digital versatile discs (DVDs), other types of optical storage devices, or magnetic cassettes. Also, the programs may be stored in a memory configured by a combination of some or all of such storage devices. Also, each of the memories may be provided in plurality.

Also, the programs may be stored in an attachable storage device that can be accessed by the electronic device through a communication network such as Internet, Intranet, local area network (LAN), wireless LAN (WLAN), or storage area network (SAN), or through a communication network configured by a combination thereof. This storage device may be accessed by the electronic device through an external port.

Also, a separate storage device on a communication network may be accessed by a portable electronic device.

For example, an electronic device may include one or more processors, a memory, and one or more modules that are stored in the memory and are executed by the one or more processors. The module of the electronic device may acquire an attached file from a message including an attached file, generate an attached file list for the acquired attached file, and display the attached file list.

In addition, the module of the electronic device may generate the attached file list by using at least one of an attached file name, an image of an attached file, a message title, a summary, and a preview file as representative information.

In addition, after displaying the attached file list, the module of the electronic device may execute the attached file by using an application according to user selection.

In addition, the module of the electronic device may generate the attached file list by using at least one of a message processing type and an attached file type. Herein, a message according to the message processing type may include at least one of an incoming message and an outgoing message, and the attached file type may include at least one of image data, audio data, video data, and name cards.

In addition, when detecting the presence of a newly transmitted/received message after generating the attached file list, the module of the electronic device may update the attached file list by using an attached file included in the message.

Program instructions to perform a method described herein, or one or more operations thereof, may be recorded, stored, or fixed in one or more computer-readable storage media. The program instructions may be implemented by a computer. For example, the computer may cause a processor to execute the program instructions. The media may include, alone or in combination with the program instructions, data files, data structures, and the like. Examples of computer-readable media include magnetic media, such as hard disks, floppy disks, and magnetic tape; optical media such as CD ROM disks and DVDs; magneto-optical media, such as optical disks; and hardware devices that are specially configured to store and perform program instructions, such as read-only memory (ROM), random access memory (RAM), flash memory, and the like. Examples of program instructions include machine code, such as produced by a compiler, and files containing higher level code that may be executed by the computer using an interpreter. The program instructions, that is, software, may be distributed over network coupled computer systems so that the software is stored and executed in a distributed fashion. For example, the software and data may be stored by one or more computer readable recording mediums. Also, functional programs, codes, and code segments for accomplishing the example embodiments disclosed herein can be easily construed by programmers skilled in the art to which the embodiments pertain based on and using the flow diagrams and block diagrams of the figures and their corresponding descriptions as provided herein. Also, the described unit to perform an operation or a method may be hardware, software, or some combination of hardware and software. For example, the unit may be a software package running on a computer or the computer on which that software is running.

As described above, the portable terminal according to the present disclosure lists and displays information about an attached file for easy detection of the content of an attached file included in a multimedia message. Accordingly, the user can easily detect a message including a desired attached file, without directly checking a multimedia message.

While the invention has been shown and described with reference to certain exemplary embodiments thereof, it will be understood by those skilled in the art that various changes in form and details may be made therein without departing from the scope of the invention as defined by the appended claims. Therefore, the scope of the invention is defined not by the detailed description of the invention but by the appended claims, and all differences within the scope will be construed as being included in the present invention.

## Claims

1. A method for managing a multimedia message service (MMS) message in a portable terminal, the method comprising:
receiving (201, 301) the MMS message;
acquiring an attached file from the MMS message;
determining (207, 305) a type of the attached file;
storing the acquired attached file to a group associated with the type of the attached file;
generating (211, 309) an attached file list including representative information about the stored attached file; and
displaying the attached file list (213),
wherein the representative information includes at least one of an attached file name, an image of an attached file, a message title, a summary description, and a preview file.

2. The method of claim 1, further comprising:
determining whether the attached file is selected by a user after display of the attached file list; and
executing instructions of the attached file using an application.

3. The method of claim 1, further comprising:
determining a message processing type of the MMS;
generating an attached file list corresponding to the stored attached file according to the message processing type,
wherein the message processing type of the MMS includes at least one of an incoming message and an outgoing message.

4. The method of claim 1, further comprising:
in response to detecting a presence of a second message received after generation of the attached file list, updating the attached file list based on a second attached file included in the second message.

5. The method of claim 1, further comprising:
determining whether an attached file is present in a second message in response to receiving the second message; and
updating the attached file list based on a title of the second message in response to determining that no attached file is present in the second message.

6. The method of claim 1, wherein generating the attached file list comprises:
determining whether one of audio data (409), image data (413) and video data (417) are attached to the message;
generating (411) the attached file list to include an audio data title in response to determining that audio data is attached;
generating (415) the attached file list to include an image in response to determining that image data is attached; and
generating (419) the attached file list to include an image from the video data in response to determining that video data is attached.

7. An electronic apparatus comprising:
one or more processors (100);
a memory (106); and
one or more modules stored in the memory and executable by the one or more processors, the one or more modules comprising instructions for:
receiving (201, 301) the MMS message,
acquiring an attached file from a multimedia message service (MMS) message,
determining (207, 305) a type of the attached file;
storing the acquired attached file to a group associated with the type of the attached file;
generating (211, 309) an attached file list including representative information about the stored attached file, and
displaying the attached file list (213),
wherein the representative information includes at least one of an attached file name, an image of an attached file, a message title, a summary description, and a preview file.

8. The electronic apparatus of claim 7, wherein the one or more modules comprise instructions for:
executing the attached file according to user selection after display of the attached file list.

9. The electronic apparatus of claim 7, wherein the one or more modules comprise instructions for:
determining a message processing type of the MMS;
generating the attached file list corresponding to the stored attached file according to the message processing type,
wherein the message processing type of the MMS includes at least one of an incoming message and an outgoing message.

10. The electronic apparatus of claim 7, wherein the one or more modules comprise instructions for:
in response to detecting a presence of a message newly transmitted/received after generation of the attached file list, updating the attached file list by using an attached file included in the message.

11. The electronic apparatus of claim 7, wherein the one or more modules comprise instructions for:
determining whether an attached file is present in a second message in response to receiving the second message; and
updating the attached file list based on a title of the second message in response to determining that no attached file is present in the second message.

12. The electronic apparatus of claim 7, wherein the one or more modules comprise instructions for:
determining whether one of audio data (409), image data (413) and video data (417) are attached to the message,
generating (411) the attached file list to include an audio data title in response to a determination that audio data is attached,
generating (415) the attached file list to include an image in response to a determination that image data is attached; and
generating (419) the attached file list to include an image from the video data in response to a determination that video data is attached.

## Patentansprüche

1. Verfahren zur Verwaltung einer Multimedia-Nachrichten-Service-(MMS)-Nachricht in einem tragbaren Endgerät, wobei das Verfahren umfasst:
Empfangen (201, 301) der MMS-Nachricht;
Erwerben einer angehängten Datei von der MMS-Nachricht;
Bestimmen (207, 305) eines Typs der angehängten Datei;
Speichern der erworbenen angehängten Datei in eine dem Typ der angehängten Datei zugeordnete Gruppe;
Generieren (211, 309) einer Liste angehängter Dateien, enthaltend repräsentative Informationen über die gespeicherte angehängte Datei; und
Anzeigen der Liste angehängter Dateien (213),
wobei die repräsentativen Informationen mindestens eines eines Namens der angehängten Datei, eines Bilds der angehängten Datei, eines Nachrichtentitels, einer Kurzbeschreibung und einer Vorschaudatei enthalten.

2. Verfahren nach Anspruch 1, ferner umfassend:
Bestimmen, ob die angehängte Datei nach der Anzeige der Liste angehängter Dateien von einem Nutzer ausgewählt wird; und
Ausführen von Anweisungen der angehängten Datei mithilfe einer Anwendung.

3. Verfahren nach Anspruch 1, ferner umfassend:
Bestimmen eines Nachrichtenverarbeitungstyps der MMS;
Generieren einer Liste angehängter Dateien entsprechend der gespeicherten angehängten Datei gemäß dem Nachrichtenverarbeitungstyp,
wobei der Nachrichtenverarbeitungstyp der MMS mindestens eine einer eingehenden Nachricht und einer ausgehenden Nachricht enthält.

4. Verfahren nach Anspruch 1, ferner umfassend:
in Reaktion auf das Detektieren eines Vorhandenseins einer zweiten Nachricht, die nach Generierung der Liste angehängter Dateien empfangen wurde, Aktualisieren der Liste angehängter Dateien basierend auf einer in der zweiten Nachricht enthaltenen zweiten angehängten Datei.

5. Verfahren nach Anspruch 1, ferner umfassend:
Bestimmen, ob eine angehängte Datei in einer zweiten Nachricht vorhanden ist, in Reaktion auf das Empfangen der zweiten Nachricht; und
Aktualisieren der Liste angehängter Dateien basierend auf einem Titel der zweiten Nachricht in Reaktion auf das Bestimmen, dass keine angehängte Datei in der zweiten Nachricht vorhanden ist.

6. Verfahren nach Anspruch 1, wobei das Generieren der Liste angehängter Dateien umfasst:
Bestimmen, ob eines von Audiodaten (409), Bilddaten (413) und Videodaten (417) an die Nachricht angehängt sind;
Generieren (411) der Liste angehängter Dateien, so dass sie einen Audiodatentitel enthält, in Reaktion auf das Bestimmen, dass Audiodaten angehängt sind;
Generieren (415) der Liste angehängter Dateien, so dass sie ein Bild enthält, in Reaktion auf das Bestimmen, dass Bilddaten angehängt sind; und
Generieren (419) der Liste angehängter Dateien, so dass sie ein Bild der Videodaten enthält, in Reaktion auf das Bestimmen, dass Videodaten angehängt sind.

7. Elektronische Vorrichtung, umfassend:
einen oder mehrere Prozessoren (100);
einen Speicher (106); und
ein oder mehrere Module, die im Speicher gespeichert sind und von dem einen oder den mehreren Prozessoren ausführbar sind, wobei das eine oder die mehreren Module Anweisungen enthalten zum:
Empfangen (201, 301) der MMS-Nachricht;
Erwerben einer angehängten Datei von einer Multimedia-Nachrichten-Service-(MMS)-Nachricht, Bestimmen (207, 305) eines Typs der angehängten Datei;
Speichern der erworbenen angehängten Datei in eine dem Typ der angehängten Datei zugeordnete Gruppe;
Generieren (211, 309) einer Liste angehängter Dateien, enthaltend repräsentative Informationen über die gespeicherte angehängte Datei, und
Anzeigen der Liste angehängter Dateien (213),
wobei die repräsentativen Informationen mindestens eines eines Namens der angehängten Datei, eines Bilds der angehängten Datei, eines Nachrichtentitels, einer Kurzbeschreibung und einer Vorschaudatei enthalten.

8. Elektronische Vorrichtung nach Anspruch 7, wobei ein oder mehrere Module Anweisungen enthalten zum:
Ausführen der angehängten Datei gemäß einer Nutzerauswahl nach der Anzeige der Liste angehängter Dateien.

9. Elektronische Vorrichtung nach Anspruch 7, wobei ein oder mehrere Module Anweisungen enthalten für:
Bestimmen eines Nachrichtenverarbeitungstyps der MMS;
Generieren der Liste angehängter Dateien entsprechend der gespeicherten angehängten Datei gemäß dem Nachrichtenverarbeitungstyp,
wobei der Nachrichtenverarbeitungstyp der MMS mindestens eine einer eingehenden Nachricht und einer ausgehenden Nachricht enthält.

10. Elektronische Vorrichtung nach Anspruch 7, wobei ein oder mehrere Module Anweisungen enthalten zum:
in Reaktion auf das Detektieren eines Vorhandenseins einer Nachricht, die nach Generierung der Liste angehängter Dateien neu gesendet/empfangen wurde, Aktualisieren der Liste angehängter Dateien basierend auf einer in der Nachricht enthaltenen angehängten Datei.

11. Elektronische Vorrichtung nach Anspruch 7, wobei ein oder mehrere Module Anweisungen enthalten zum:
Bestimmen, ob eine angehängte Datei in einer zweiten Nachricht vorhanden ist, in Reaktion auf das Empfangen der zweiten Nachricht; und
Aktualisieren der Liste angehängter Dateien basierend auf einem Titel der zweiten Nachricht in Reaktion auf das Bestimmen, dass keine angehängte Datei in der zweiten Nachricht vorhanden ist.

12. Elektronische Vorrichtung nach Anspruch 7, wobei eine oder mehrere Module Anweisungen enthalten zum:
Bestimmen, ob eines von Audiodaten (409), Bilddaten (413) und Videodaten (417) an die Nachricht angehängt sind,
Generieren (411) der Liste angehängter Dateien, so dass sie einen Audiodatentitel enthält, in Reaktion auf das Bestimmen, dass Audiodaten angehängt sind,
Generieren (415) der Liste angehängter Dateien, so dass sie ein Bild enthält, in Reaktion auf das Bestimmen, dass Bilddaten angehängt sind; und
Generieren (419) der Liste angehängter Dateien, so dass sie ein Bild der Videodaten enthält, in Reaktion auf das Bestimmen, dass Videodaten angehängt sind.

## Revendications

1. Procédé de gestion d'un message de service de message multimédia (MMS) dans un terminal portable, le procédé comprenant :
la réception (201, 301) du message MMS ;
l'acquisition d'un fichier joint depuis le message MMS ; la détermination (207, 305) d'un type du fichier joint ;
le stockage du fichier joint acquis à un groupe associé au type du fichier joint ;
la génération (211, 309) d'une liste de fichiers joints incluant des informations représentatives concernant le fichier joint stocké ; et
l'affichage de la liste de fichiers joints (213),
dans lequel les informations représentatives incluent au moins l'un d'un nom de fichier joint, une image d'un fichier joint, un titre de message, une description de synthèse, et un fichier de prévisualisation.

2. Procédé selon la revendication 1, comprenant en outre :
la détermination si le fichier joint est sélectionné par un utilisateur après affichage de la liste de fichiers joints ; et
l'exécution d'instructions du fichier joint en utilisant une application.

3. Procédé selon la revendication 1, comprenant en outre : la détermination d'un type de traitement de message du MMS ;
la génération d'une liste de fichiers joints correspondant au fichier joint stocké en fonction du type de traitement de message,
dans lequel le type de traitement de message du MMS inclut au moins l'un d'un message entrant et d'un message sortant.

4. Procédé selon la revendication 1, comprenant en outre :
en réponse à la détection d'une présence d'un deuxième message reçu après génération de la liste de fichiers joints, l'actualisation de la liste de fichiers joints sur la base d'un deuxième fichier joint inclus dans le deuxième message.

5. Procédé selon la revendication 1, comprenant en outre :
la détermination si un fichier joint est présent dans un deuxième message en réponse à la réception du deuxième message ; et
l'actualisation de la liste de fichiers joints sur la base d'un titre du deuxième message en réponse à la détermination qu'aucun fichier joint n'est présent dans le deuxième message.

6. Procédé selon la revendication 1, dans lequel la génération de la liste de fichiers joints comprend :
la détermination si des données parmi des données audio (409), données image (413) et données vidéo (417) sont jointes au message ;
la génération (411) de la liste de fichiers joints pour inclure un titre de données audio en réponse à la détermination que des données audio sont jointes ;
la génération (415) de la liste de fichiers joints pour inclure une image en réponse à la détermination que des données image sont jointes ; et
la génération (419) de la liste de fichiers joints pour inclure une image issue des données vidéo en réponse à la détermination que des données vidéo sont jointes.

7. Appareil électronique comprenant :
un ou plusieurs processeurs (100) ;
une mémoire (106) ; et
un ou plusieurs modules stockés dans la mémoire et exécutables par l'un ou plusieurs processeurs, l'un ou plusieurs modules comprenant des instructions pour :
la réception (201, 301) du message MMS ;
l'acquisition d'un fichier joint depuis un message de service de message multimédia (MMS), la détermination (207, 305) d'un type du fichier joint ;
le stockage du fichier joint acquis à un groupe associé au type du fichier joint ;
la génération (211, 309) d'une liste de fichiers joints incluant des informations représentatives concernant le fichier joint stocké ; et
l'affichage de la liste de fichiers joints (213),
dans lequel les informations représentatives incluent au moins l'un d'un nom de fichier joint, une image d'un fichier joint, un titre de message, une description de synthèse, et un fichier de prévisualisation.

8. Appareil électronique selon la revendication 7, dans lequel l'un ou plusieurs modules comprennent des instructions pour :
l'exécution du fichier joint en fonction d'une sélection d'utilisateur après affichage de la liste de fichiers joints.

9. Appareil électronique selon la revendication 7, dans lequel l'un ou plusieurs modules comprennent des instructions pour :
la détermination d'un type de traitement de message du MMS ;
la génération d'une liste de fichiers joints correspondant au fichier joint stocké en fonction du type de traitement de message,
dans lequel le type de traitement de message du MMS inclut au moins l'un d'un message entrant et d'un message sortant.

10. Appareil électronique selon la revendication 7, dans lequel l'un ou plusieurs modules comprennent des instructions pour :
en réponse à la détection d'une présence d'un message nouvellement transmis/reçu après génération de la liste de fichiers joints, l'actualisation de la liste de fichiers joints en utilisant un fichier joint inclus dans le message.

11. Appareil électronique selon la revendication 7, dans lequel l'un ou plusieurs modules comprennent des instructions pour :
la détermination si un fichier joint est présent dans un deuxième message en réponse à la réception du deuxième message ; et
l'actualisation de la liste de fichiers joints sur la base d'un titre du deuxième message en réponse à la détermination qu'aucun fichier joint n'est présent dans le deuxième message.

12. Appareil électronique selon la revendication 7, dans lequel l'un ou plusieurs modules comprennent des instructions pour :
la détermination si des données parmi des données audio (409), données image (413) et données vidéo (417) sont jointes au message,
la génération (411) de la liste de fichiers joints pour inclure un titre de données audio en réponse à une détermination que des données audio sont jointes,
la génération (415) de la liste de fichiers joints pour inclure une image en réponse à une détermination que des données image sont jointes ; et
la génération (419) de la liste de fichiers joints pour inclure une image issue des données vidéo en réponse à une détermination que des données vidéo sont jointes.
